# EUROPEAN PATENT SPECIFICATION

(11) **EP 3 909 742 B1**
(45) Date of publication and mention of the grant of the patent: **30.10.2024**
(21) Application number: 20175057.7
(22) Date of filing: 15.05.2020
(51) Int. Cl.: B29C 49/00, B65D 1/02, B29C 49/06, B29C 49/10, B29K 23/00, B29L 31/00

(54) **INJECTION STRETCH BLOW MOULDED ARTICLE**
SPRITZSTRECKBLASGEFORMTER ARTIKEL
ARTICLE MOULÉ PAR ÉTIRAGE-SOUFFLAGE À INJECTION

(43) Date of publication of application: 17.11.2021
(73) Proprietor: Borealis AG, 1020 Vienna (AT)
(72) Inventor: WANG, Jingbo, 4021 Linz (AT); POTTER, Elisabeth, 4021 Linz (AT); CIGON, Meta, Wien (AT)
(74) Representative: Dehns

(56) References cited:
- EP-A1- 0 096 968
- EP-A1- 0 556 829
- EP-A1- 1 870 223
- EP-A1- 2 686 382
- EP-B1- 0 556 829
- EP-B1- 2 686 382
- US-A- 4 500 682
- US-A1- 2006 279 026
- MAPLESTON P: "MORE ISBM OPTIONS BRIGHTEN OUTLOOK FOR PP BOTTLES", MODERN PLASTICS INTERNATIONAL, MCGRAW-HILL,INC. LAUSANNE, CH, vol. 23, no. 5, 1 May 1993 (1993-05-01), pages 14 - 16, XP000367586, ISSN: 0026-8283
- NEUMANN E H: "PP PROCESSING ON SINGLE STAGE INJECTION-STRETCH BLOW MOULDING MACHINES", PV INTERNATIONAL PLASTICS MAGAZINE, ZECHNER UND HUETHIG VERLAG, DE, vol. 4, no. 2, 1 October 1993 (1993-10-01), pages 8 - 11, XP000430350

## Description

The present invention relates to an injection stretch blow-molded article comprising a particular polypropylene copolymer composition as well as a process for the preparation of an injection stretch blow-molded article, particularly bottles, using said polypropylene copolymer composition.

Injection stretch blow-molding processes, both single- and two-stage, are commonly used in the art for the production of containers made of thermoplastic polymer materials, particularly polyethylene terephthalate (PET). In fact PET is particularly used for the above mentioned processes because it allows operation in a wide temperature range (window of processability), and to obtain molded products having excellent mechanical properties and high transparency.

The ISBM process involves producing a preform by injection moulding followed by stretching and blowing the preform in order to induce biaxial orientation in the solid phase. Two types of ISBM process are practised. In the single-stage process a preform is injection moulded, stretched and blown before it is allowed to cool. In the two-stage process, the injection moulded preform is allowed to cool before it is reheated, stretched and blown into a container. ISBM processes are used to make containers such as bottles and jars having very good optical properties.

PET is a relatively expensive polymer and cannot function at higher temperatures due to poor heat resistance. The skilled man is thus looking for alternatives to PET for ISBM applications.

Polypropylene is cheaper than PET and demonstrates better heat resistance than PET. In some applications, particularly when high temperature resistance is required, it would therefore be advantageous to use polypropylene instead of PET in ISBM processes. However, there are issues with the cycle time of polypropylene in ISBM processes, i.e. for each article, the stretching and blowing process takes too long. Also, PP based ISBM articles are often rather opaque. As it is often a requirement that the contents of the container are visible to the consumer, that is unacceptable.

PP is already used in many injection moulding applications such as in the manufacture of caps and closures and thin wall packaging.

The present inventors seeks to employ certain PP copolymer compositions in the manufacture of injection stretch blow moulded articles and in particular seeks to use certain PP copolymer compositions due to their short cycle times, production efficiency, reduced energy consumption and high transparency.

Similar PP copolymers are known in the literature. WO2014/154610 describes polypropylene copolymers for high impact applications including injection moulding.

WO2014/187687 also discloses PP random copolymers for injection moulding applications.

WO2019/002345 and WO2019/002346 describe a process for the preparation of a PP copolymer composition made in a sequential polymerisation process. The target PP copolymers have improved balance of flow, stability and impact strength with good optical properties and can be used in certain moulding processes e.g. for the preparation of caps and closures. There is no suggestion of their application in ISBM technology.

EP2686382 and EP2898017 disclose a propylene random copolymer comprising propylene random copolymer composition comprising:
(A) 60-85wt% of a copolymer of propylene and from 0.1 to 2wt% of units derived from ethylene; and
(B) 15-40wt% of a copolymer of propylene and from 7 to 17wt% of units derived from ethylene, said composition having a total ethylene content of from 3 to 4.5 wt%, a melt flow rate value according to ISO 1133 (230°C, 2.16 kg) of from 10 to 120 g/10 min or greater than 60 to 150 g/10min respectively. The polymers are used for film, injection moulding and ISBM.

The present inventors seeks to employ certain PP copolymer compositions in the manufacture of injection stretch blow moulded articles and in particular seek to use certain PP copolymer compositions due to their short cycle times in preform manufacture, fast preform cooling properties, production efficiency, reduced energy consumption and high transparency.

In particular, the present inventors have found that performs made using the PP copolymer compositions of the invention can be rapidly cooled meaning that cycle time for preform production is shorter. These preforms can also be used in the stretch blow moulding phase of the ISBM process under the same conditions as preforms that cool more slowly and the articles that result are less hazy. We therefore realise improvements in both processability and optical properties.

### Summary of Invention

The invention provides an injection stretch blow moulded article according to claim 1, the article comprising:
(I) a polypropylene copolymer composition having an ethylene content of 2.0 to 5.0 wt%; and
   a crystallisation temperature (Tc) of at least 90°C when subjected to a cooling rate of 10 K/s;
   a crystallisation temperature (Tc) of at least 55°C when subjected to a cooling rate of 100 K/s; and
   a crystallisation temperature (Tc) of at least 40°C when subjected to a cooling rate of 300 K/s; and
(II) optionally at least one nucleating agent;
wherein the polypropylene copolymer composition comprises:
40 to 59 wt% of a first homopolymer fraction of first propylene copolymer fraction of propylene and one or more comonomers selected from ethylene and C4-C10 alpha-olefins said first fraction having a comonomer content of 0.0 to 1.8 wt%, and 60 to 41 wt% of a second propylene copolymer fraction.

Viewed from another aspect the invention provides a process according to claim 10 for the formation of an injection stretch blow moulded article as hereinbefore defined comprising:
(i) extruding a polypropylene copolymer composition as hereinbefore defined and optionally at least one nucleating agent and injecting the extrudate into a mould to form a preform;
(ii) allowing the preform to cool;
(iii) reheating the preform to a temperature in the range 90 to 160°C; and
(iv) stretching and blowing the preform to form an article.

Viewed from another aspect the invention provides a process according to claim 11 for the formation of an injection stretch blow moulded article as hereinbefore defined comprising:
(i) extruding a polypropylene copolymer composition as hereinbefore defined and optionally at least one nucleating agent and injecting the extrudate into a mould to form a preform; and
(ii) stretching and blowing the preform to form an article without allowing the preform to cool.

The polypropylene copolymer composition for use in the ISBM articles of the invention is one that can be made in sequential polymerization steps.

In a further embodiment, the invention provides:
obtaining a polypropylene copolymer composition by sequential polymerization comprising the steps:
   A) polymerizing in a first reactor, preferably a slurry reactor, in the presence of a Ziegler-Natta catalyst, monomers comprising propylene and optionally one or more comonomers selected from ethylene and C4-C10 alpha-olefins, to obtain a first propylene polymer fraction having a comonomer content in the range of 0.0 to 1.8 wt%, and a MFR2 in the range of from 12.0 to 40.0 g/10 min, as measured according to ISO 1133 at 230 °C under a load of 2.16 kg;
   B) polymerizing in a second reactor, preferably a first gas-phase reactor, monomers comprising propylene, ethylene and optionally one or more comonomers selected from C4-C10 alpha-olefins, in the presence of the first propylene polymer fraction, to obtain a second propylene polymer fraction,
wherein the polypropylene copolymer composition comprising said first and second propylene polymer fractions has an MFR2 in the range of from 12.0 to 60.0 g/10 min, as measured according to ISO 1133 at 230°C under a load of 2.16 kg, has an ethylene content in the range of from 2.0 to 5.0 wt% and
a crystallisation temperature (Tc) of at least 90°C when subjected to a cooling rate of 10 K/s;
a crystallisation temperature (Tc) of at least 55°C when subjected to a cooling rate of 100 K/s; and
a crystallisation temperature (Tc) of at least 40°C when subjected to a cooling rate of 300 K/s;
and then subjecting the polypropylene copolymer composition, optionally with at least one nucleating agent to an ISBM process as herein before defined.

It is also preferred if the wt ratio of the comonomer content of component A) to the comonomer content of the polypropylene copolymer composition is 0.35 or less. In one embodiment, the wt ratio of the ethylene content of component A) to the ethylene content of the polypropylene copolymer composition is 0.35 or less.

Viewed from another aspect the invention provides a process for producing an ISBM article comprising obtaining a polypropylene copolymer composition by sequential polymerization comprising:
A) polymerizing in a first reactor, preferably a slurry reactor, in the presence of a Ziegler-Natta catalyst, monomers comprising propylene and optionally one or more comonomers selected from ethylene and C4-C10 alpha olefins, to obtain a first propylene polymer fraction having a comonomer content in the range of 0.0 to 1.8 wt%, and a MFR2 in the range of from 12.0 to 40.0 g/10 min, as measured according to ISO 1133 at 230 °C under a load of 2.16 kg;
(B) polymerizing in a second reactor, preferably a first gas-phase reactor, monomers comprising propylene and ethylene and optionally C4-C10 alpha olefins, in the presence of the first propylene polymer fraction, to obtain a second propylene polymer fraction,
(C) polymerizing in a third reactor, preferably a second gas-phase reactor, monomers comprising propylene and ethylene and optionally C4-C10 alpha olefins, in the presence of the second propylene polymer fraction to obtain a third propylene polymer fraction;

wherein the polypropylene copolymer composition comprising said first, second and third propylene polymer fractions has an MFR2 in the range of from 12.0 to 60.0 g/10min, as measured according to ISO 1133 at 230 °C under a load of 2.16 kg, has an ethylene content in the range of from 2.0 to 5.0 wt%; and
a crystallisation temperature (Tc) of at least 90°C when subjected to a cooling rate of 10 K/s;
a crystallisation temperature (Tc) of at least 55°C when subjected to a cooling rate of 100 K/s; and
a crystallisation temperature (Tc) of at least 40°C when subjected to a cooling rate of 300 K/s;
subjecting the polypropylene copolymer composition, optionally with at least nucleating agent, to an ISBM process as herein before defined.

It is preferred if the wt ratio of the comonomer content of component A) to the comonomer content of the polypropylene copolymer composition is 0.35 or less.

Preferably an ISBM article as defined herein has a MFR2 in the range of from 12.0 to 60.0 g/10 min, as measured according to ISO 1133 at 230°C under a load of 2.16 kg, and a ratio of the comonomer content of the first homo or copolymer fraction to the comonomer content of the polypropylene copolymer composition of 0.35 or less. More preferably, an ISBM article as defined herein comprises a polypropylene copolymer composition having a first homo or ethylene copolymer fraction, a second ethylene copolymer fraction and a third ethylene copolymer fraction.

Viewed from another aspect the invention provides the use of a polypropylene copolymer composition as hereinbefore defined optionally together with at least one nucleating agent, to improve the optics of an ISBM article made therewith.

Viewed from another aspect the invention provides the use of a polypropylene copolymer composition as hereinbefore defined optionally together with at least one nucleating agent, to reduce the cooling time of a preform made in an ISBM process.

### Detailed Description of the Invention

This invention concerns an injection stretch blow moulded article (ISBM) article and a process for the preparation of such an article. The invention utilises a polypropylene copolymer composition which is converted into the ISBM article. It is preferred if the PP copolymer composition used in the invention comprises at least two components, such as two or three components. The PP copolymer composition of the invention is based on a random copolymer rather than a block copolymer. Processes for the preparation of PP copolymer compositions of the invention are described in detail in WO2019/002345. The protocols therein can be followed e.g. in terms of reactor set up, temperatures, pressures, monomer and comonomer concentration, hydrogen concentration and so on.

In a first embodiment, the polypropylene copolymer composition used to manufacture the ISBM articles of the invention can be made in at least two main polymerisation stages, e.g. two steps only. In a second embodiment, the polypropylene copolymer composition used to manufacture the ISBM articles of the invention can be made in at least three main polymerisation stages, e.g. three steps only. A polymer made in one reaction stage forms a fraction of the PP copolymer composition.

In the first embodiment, the first and second propylene polymer fractions, are produced in a sequential polymerization process. The term "sequential polymerization process", in the present application, indicates that the propylene polymer fractions are produced in a process comprising at least two reactors connected in series. In one preferred embodiment the term "sequential polymerization process" indicates, in the present application, that the reaction mixture of the first reactor, i.e. the first propylene polymer fraction with unreacted monomers, is conveyed, preferably directly conveyed; into a second reactor where a second propylene polymer fraction is obtained.

Accordingly, in the process to prepare the PP copolymer composition of use in the invention:
i- the first propylene polymer fraction obtained in the first reactor generally comprises a first propylene polymer which is produced in said first reactor,
ii- the second propylene polymer fraction obtained in the second reactor generally comprises a second propylene polymer which is produced in said second reactor.

The material produced after the second reactor is the sum of (co)polymers produced in the first reactor and in the second reactor.

Accordingly, the present process comprises at least a first reactor and a second reactor. The process may comprise at least one additional polymerization reactor subsequent to the second reactor. In one specific embodiment the process according to the invention consists of two polymerization reactors, i.e. a first reactor and a second reactor. The term "polymerization reactor" shall indicate that the main polymerization takes place. Thus, in case the process consists of two or more polymerization reactors, this definition does not exclude the option that the overall process comprises a pre-polymerization step in a pre-polymerization reactor. The term "consists of" is only a closing formulation in view of the main polymerization reactors.

In case the overall process comprises a pre-polymerization reactor, the term "first propylene polymer fraction" means the sum of (co)polymer produced in the pre-polymerization reactor and the (co)polymer produced in the first reactor.

When the overall process comprises a pre-polymerization reactor, said pre-polymerization step takes place prior to the polymerization in the first reactor. The pre-polymerization step takes place in a pre-polymerization reactor wherein pre-(co)polymerization of propylene is conducted. The pre-polymerization reactor is of smaller size compared to the first reactor, the second reactor and the subsequent polymerization reactor or reactors, according to the invention, respectively. The reaction volume of the pre-polymerization reactor can be, for example, between 0.001 % and 10 % of the reaction volume of the first reactor, like the loop reactor. In said pre-polymerization reactor, the pre-(co)polymerization of propylene is performed in bulk or slurry, producing a propylene (co)polymer.

In the first reactor, a monomer feed comprised of propylene and optionally one or more comonomers selected from ethylene and C₄-C₁₀ alpha-olefins is fed. In case the pre-polymerization step is present in the process, the propylene (co)polymer produced in the pre-polymerization reactor, is also fed into the first reactor. In the first reactor, a first propylene polymer fraction is obtained.

The first propylene polymer fraction has a comonomer content selected from ethylene and C₄-C₁₀ alpha-olefins in the range of from 0.0 to 1.8 wt%, preferably in the range of from 0.1 to 1.0 wt%, more preferably in the range of from 0.1 to 0.8 wt%, especially 0.3 to 1.5 wt% even 0.5 to 1.2 wt%. wt%, relative to the total amount of monomers present in the first propylene polymer fraction. The first polymer fraction is therefore preferably a copolymer, especially a copolymer with ethylene as the sole comonomer.

Generally, the first propylene polymer fraction has a melt flow rate (MFR₂) in the range of from 12 to 40 g/10min, preferably in the range of from 15 to 35 g/10min, more preferably in the range of from 15 to 30 g/10min. The MFR₂ is determined according to ISO 1133, at a temperature of 230 °C and under a load of 2.16 kg.

Generally, the reaction mixture of the first reactor is conveyed, preferably directly conveyed; into the second reactor. By "directly conveyed" is meant a process wherein the reaction mixture of the first reactor is led directly to the next polymerization step, i.e. the second reactor. Monomers comprising propylene, ethylene and optionally C₄-C₁₀ alpha-olefins are fed into the second reactor. In the second reactor, a second propylene polymer fraction is obtained.

The second propylene polymer fraction contains ethylene and optionally C₄-C₁₀ alpha-olefins. It is preferred if the second propylene polymer fraction has an ethylene content of 6 wt% or less, such as 1.0 to 6.0 wt%.

In the process, the propylene polymer produced in the first reactor, i.e. the first propylene polymer, is produced in an amount in the range of from 40 to 59 wt% preferably in an amount in the range of from 45 to 55 wt%.

In the process according to the invention, the propylene polymer produced in the second reactor, i.e. the second propylene polymer, is produced in an amount in the range of from 41 to 60 wt%, preferably in an amount in the range of from 45 to 55 wt%. The amount of the first propylene polymer and the second propylene polymer is relative to the total sum of first propylene polymer and second propylene polymer.

In a preferred embodiment, the one or more comonomers selected from ethylene and C₄-C₁₀ alpha-olefins are incorporated into the reactors of the process in different amounts resulting in a polypropylene copolymer composition having bimodal comonomer composition with respect to the comonomer content of each of the propylene polymers comprised in said polypropylene copolymer composition, i.e. first propylene polymer and second propylene polymer.

In the process according to the invention, the one or more comonomers are selected from ethylene and C₄-C₁₀ alpha-olefins, preferably selected from ethylene and C₄-C₈ alpha-olefins, more preferably selected from ethylene and C₄-C₆ alpha-olefins, even more preferably the comonomer is selected from solely ethylene.

The comonomer ratio is preferably less than 0.35, preferably less than 0.30, especially less than 0.25. The comonomer ratio is preferably at least 0.1. This ratio is the ratio of comonomer content in fraction 1/ final comonomer content. Having a higher comonomer content in the gas phase fraction (and hence the final polymer) vs the first fraction improves impact behaviour without damaging the crystallisation speed.

After the polymerization in the second reactor step, the material obtained in the second reactor is recovered by conventional procedures know by the person skilled in the art. The recovered material according to the invention is generally in the form of particles.

In a second embodiment, the process to prepare the required polypropylene copolymer composition employs at least three main reactors:
i- the first propylene polymer fraction obtained in the first reactor generally comprises a first propylene polymer which is produced in said first reactor,
ii- the second propylene polymer fraction obtained in the second reactor generally comprises a second propylene polymer which is produced in said second reactor,
iii- the third propylene polymer fraction obtained in the third reactor generally comprises a third propylene polymer which is produced in said third reactor.

Accordingly, the present process may also comprise at least a first reactor, a second reactor and a third reactor. In one specific embodiment, the process according to the invention consists of three polymerization reactors i.e. a first reactor, a second reactor and a third reactor. The term "polymerization reactor" shall indicate that the main polymerization takes place. Thus, in case the process consists of three or more polymerization reactors, this definition does not exclude the option that the overall process comprises for instance a pre-polymerization step in a pre-polymerization reactor. The term "consists of" is only a closing formulation in view of the main polymerization reactors. In case the overall process according to the invention comprises a pre-polymerization reactor, the term "first propylene polymer fraction" means the sum of (co)polymer produced in the pre-polymerization reactor and the (co)polymer produced in the first reactor.

When the overall process according to the invention comprises a pre-polymerization reactor, said pre-polymerization step takes place prior to the polymerization in the first reactor. The pre-polymerization step takes place in a pre-polymerization reactor wherein pre-(co)polymerization of propylene is conducted. The pre-polymerization reactor is of smaller size compared to the first reactor, the second reactor, the third reactor and the subsequent polymerization reactor or reactors, according to the invention, respectively. The reaction volume of the pre-polymerization reactor can be, for example, between 0.001 % and 10 % of the reaction volume of the first reactor, like the loop reactor. In said pre-polymerization reactor, the pre-(co)polymerization of propylene is performed in bulk or slurry, producing a propylene (co)polymer.

In the first reactor of the process according to the invention, a monomer feed comprised of propylene and optionally one or more comonomers selected from ethylene and C₄-C₁₀ alpha-olefins is fed. In case the pre-polymerization step is present in the process, the propylene (co)polymer produced in the pre-polymerization reactor, is also fed into the first reactor. In the first reactor, a first propylene polymer fraction is obtained.

The first propylene polymer fraction has a comonomer content selected from ethylene and C₄-C₁₀ alpha-olefins in the range of from 0.0 to 1.8 wt%, preferably in the range of from 0.1 to 1.0 wt%, more preferably in the range of from 0.1 to 8.0 wt%, especially 0.3 to 1.5 wt% even 0.5 to 1.2 wt%.

Generally, the first propylene polymer fraction has a melt flow rate (MFR₂) in the range of from 12 to 40 g/10min, preferably in the range of from 15 to 35 g/10min, more preferably in the range of from 15 to 30 g/10min. The MFR₂ is determined according to ISO 1133, at a temperature of 230 °C and under a load of 2.16 kg.

The second propylene polymer fraction comprises ethylene and optionally C₄-C₁₀ alpha-olefins. The material produced after the second reactor (i.e. the sum of the first and second polymer fractions) may have a comonomer content in the range of from 0.3 to 2.0 wt%, preferably in the range of from 0.5 to 1.7 wt%, more preferably in the range of from 0.6 to 1.5 wt%.

Generally, the material produced after the second reactor (i.e. the sum of the first and second polymer fractions) may have a melt flow rate (MFR₂) in the range of from 11 to 60 g/10min, preferably in the range of from 15 to 40 g/10min, more preferably in the range of from 17 to 35 g/10min. The MFR₂ is determined according to ISO 1133, at a temperature of 230 °C and under a load of 2.16 kg.

Generally, the reaction mixture of the second reactor is conveyed, preferably directly conveyed; into the third reactor. By "directly conveyed" is meant a process wherein the reaction mixture of the second reactor is led directly to the next polymerization step, i.e. the third reactor. Monomers comprising propylene, ethylene and optionally C4-C10 alpha-olefins are fed into the third reactor. In the third reactor, a third propylene polymer fraction is obtained.

The third propylene copolymer fraction comprises ethylene and optionally C4-C10 alpha-olefins.

In the process, the propylene polymer produced in the first reactor i.e. the first propylene polymer is generally produced in an amount in the range of from 20 to 55 wt%, preferably in an amount in the range of from 25 to 55 wt%, more preferably in an amount in the range of from 30 to 50 wt%.

In the process, the propylene polymer produced in the second reactor i.e. the second propylene polymer is generally produced in an amount in the range of from 30 to 70 wt%, preferably in an amount in the range of from 35 to 70 wt%, more preferably in an amount in the range of from 35 to 55 wt%.

In the process, the propylene polymer produced in the third reactor i.e. the third propylene polymer is generally produced in an amount in the range of from 6 to 20 wt%, preferably in an amount in the range of from 7 to 15 wt%, more preferably in an amount in the range of from 8 to 15 wt%. The amount of the first propylene polymer, the second propylene polymer and the third propylene polymer is relative to the total sum of first propylene polymer, second propylene polymer and third propylene polymer comprised in the material.

Ideally therefore there is 20 to 55 wt% of first propylene polymer fraction, 30 to 70 wt% of the second propylene polymer fraction and 6 to 20 wt% of the third propylene polymer fraction.

In a preferred embodiment, the one or more comonomers selected from ethylene and C4-C10 alpha-olefins are incorporated into the reactors of the process in different amounts resulting in a polypropylene copolymer composition having trimodal comonomer distribution with respect to the comonomer content of each of the propylene polymers comprised in said composition, i.e. first propylene polymer, second propylene polymer and third propylene polymer.

In the process according to the invention, the comonomer is preferably selected from solely ethylene.

The comonomer ratio is ideally less than 0.35, preferably less than 0.3, especially less than 0.25. The comonomer ratio is preferably at least 0.1. This ratio is the comonomer content in fraction 1/ final comonomer content. Having a higher comonomer content in the gas phase fraction vs the first fraction improves impact behaviour without damaging the crystallisation speed.

After the polymerization in the third reactor step, the polymer obtained in the third reactor is recovered by conventional procedures know by the person skilled in the art. The recovered polymer according to the invention is generally in the form of particles.

### Catalyst

Generally, a polymerization catalyst is used to prepare the required polypropylene copolymer composition. The polymerization catalyst is preferably a Ziegler-Natta catalyst. Generally, the polymerization Ziegler-Natta catalyst comprises one or more compounds of a transition metal (TM) of Group 4 to 6 as defined in IUPAC version 2013, like titanium, further a Group 2 metal compound, like a magnesium compound and an internal donor (ID).

WO2019/002345 contains a complete disclosure of the catalysts of use in the present invention.

### Polypropylene Copolymer Composition

According to the present invention, the material produced after the second reactor (i.e. the sum of the first and second polymer fractions) or the material produced after the third reactor (i.e. the sum of the first to third polymer fractions) may be recovered from the polymerization process. It can be extruded, optionally in the presence of at least one nucleating agent, in order to produce the required polypropylene copolymer composition for ISBM article manufacture.

Examples of additives include, but are not limited to, stabilizers such as antioxidants (for example sterically hindered phenols, phosphites/phosphonites, sulphur containing antioxidants, alkyl radical scavengers, aromatic amines, hindered amine stabilizers, or blends thereof), metal deactivators (for example Irganox ^{®} MD 1024), or UV stabilizers (for example hindered amine light stabilizers). Other typical additives are modifiers such as antistatic or antifogging agents (for example ethoxylated amines and amides or glycerol esters), acid scavengers (for example Ca-stearate), blowing agents, cling agents (for example polyisobutene), lubricants and resins (for example ionomer waxes, polyethylene- and ethylene copolymer waxes, Fischer Tropsch waxes, montan-based waxes, fluoro-based compounds, or paraffin waxes), as well as slip and antiblocking agents (for example erucamide, oleamide, talc, natural silica and synthetic silica or zeolites) and mixtures thereof.

Generally, the total amount of additives introduced into the extruder during the process according to the present invention, is not more than 5.0 wt%, preferably not more than 2.0 wt%, more preferably not more than 1.5 wt%. The amount of additives is relative to the total amount of polypropylene copolymer composition introduced into the extruder.

The polymer composition may be combined with, conveniently extruded with, an amount of nucleating agent, preferably in the range of from 0.01 to 1.0 wt%, preferably in the range of from 0.03 to 0.9 wt%, more preferably in the range of from 0.05 to 0.8 wt%. The amount of the at least one nucleating agent is relative to the total weight of the PP copolymer composition according to the invention. The ISBM articles of the invention will generally comprises at least 95 wt% of the PP copolymer composition, such as at least 98 wt% of the PP copolymer composition.

The nucleating agent is generally selected from the group consisting of: salts of monocarboxylic acids and polycarboxylic acids, e.g. sodium benzoate or aluminum tert-butylbenzoate, dibenzylidenesorbitol (e.g. 1,3 : 2,4 dibenzylidenesorbitol) and C1-C8-alkyl-substituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], vinylcycloalkane polymer and vinylalkane polymer, and mixtures thereof.

Preferably, the nucleating agent is a dibenzylidenesorbitol (e.g. 1,3 : 2,4 dibenzylidenesorbitol) or a C1-C8-alkyl-substituted dibenzylidenesorbitol derivative, such as methyldibenzylidenesorbitol, ethyldibenzylidenesorbitol or dimethyldibenzylidenesorbitol (e.g. 1,3 : 2,4 di(methylbenzylidene) sorbitol) or a substituted nonitol-derivative, such as 1,2,3,-trideoxy-4,6:5,7-bis-O-[(4-propylphenyl) methylene]-nonitol. Most preferably the nucleating agent is vinylcycloalkane polymer.

At the end of the extruder, a polypropylene copolymer composition melt is obtained. The polypropylene copolymer composition melt might then be passed through a die in the optional die zone of the extruder. When the polypropylene copolymer composition melt is passed through the die it is generally further cooled down and pelletized.

The pelletizer is generally a strand pelletizer or an underwater pelletizer.

In any embodiment, the polypropylene copolymer composition obtainable, preferably obtained, by the process according to the invention generally has one comonomer only, ethylene.

In any embodiment, the polypropylene copolymer composition of use in the invention preferably comprises three fractions, i.e. made in first, second and third reactors.

In any embodiment, the polypropylene copolymer composition of use in the invention generally has an ethylene content in the range of from 2.0 to 5.0 wt%, preferably in the range of from 2.0 to 4.5 wt%, more preferably in the range of from 2.0 to 4.0 wt%. Most preferred amounts are 2.0 to 3.4 or 2.0 to 3.0 wt%. The ethylene content is relative to the total amount of monomers present in the polypropylene copolymer composition.

In any embodiment, the polypropylene copolymer composition has a melt flow rate (MFR₂) in the range of from 12 to 60 g/10min, preferably in the range of from 12 to 35 g/10min, more preferably in the range of from 12 to 30 g/10min, especially 12 to 20 g/10min. The MFR2 is determined according to ISO 1133, at a temperature of 230 °C and under a load of 2.16 kg. The combination of 2.0 to 3.4 wt% ethylene and an MFR2 of 12 to 20 g/10min is especially preferred.

In any embodiment, the polypropylene copolymer composition has a crystallisation temperature (Tc) of at least 90°C when subjected to a cooling rate of 10 K/s.

In any embodiment, the polypropylene copolymer composition has a crystallisation temperature (Tc) of at least 55°C when subjected to a cooling rate of 100 K/s.

In any embodiment, the polypropylene copolymer composition has a crystallisation temperature (Tc) of at least 40°C when subjected to a cooling rate of 300 K/s.

The polypropylene copolymer composition preferably has a crystallisation temperature (Tc) of at least 95°C when subjected to a cooling rate of 10 K/s.

In any embodiment, the polypropylene copolymer composition preferably has a crystallisation temperature (Tc) of at least 75°C when subjected to a cooling rate of 100 K/s.

In any embodiment, the polypropylene copolymer composition preferably has a crystallisation temperature (Tc) of at least 55°C when subjected to a cooling rate of 300 K/s.

In any embodiment, the polypropylene copolymer composition preferably has a crystallisation temperature (Tc) of 90 to 140°C when subjected to a cooling rate of 10 K/s.,
a crystallisation temperature (Tc) of 55 to 100°C when subjected to a cooling rate of 100 K/s.; and
a crystallisation temperature (Tc) of 40 to 80°C when subjected to a cooling rate of 300 K/s.

In any embodiment, the polypropylene copolymer composition preferably has a crystallisation temperature (Tc) of at least 95°C when subjected to a cooling rate of 10 K/s.,
a crystallisation temperature (Tc) of at least 75°C when subjected to a cooling rate of 100 K/s.; and
a crystallisation temperature (Tc) of at least 55°C when subjected to a cooling rate of 300 K/s.

In any embodiment, the polypropylene copolymer composition preferably has a crystallisation temperature (Tc) of at least 50°C when subjected to a cooling rate in the range of 100 to 600 K/s.

In any embodiment and at any cooling rate, the polypropylene copolymer composition preferably has a crystallisation temperature (Tc) of less than 140°C.

### ISBM process

The PP copolymer composition is then used to prepare ISBM articles. Injection stretch blow moulding is a known process which involves certain steps. First, a preform is injection moulded. The polypropylene copolymer composition is heated to melt the composition to form a flowable polymer melt that is introduced by injection into the mould. The injection mould has a cavity and a mating ram to form the preform into the desired shape, e.g. one having threaded neck portion and a bottle body portion. The preform can then be removed from the mould, cooled and stored until it is ready to be formed into an article or the preform can be stretched and blown straight away.

Preforms of the invention have been found to exhibit rapid cooling speeds. Preform cooling preferably takes less than 10 secs, such as 7 to 9 secs. Cooling time is the time taken for the preform to cool to 30 °C. Cooling can be effected using a quench step. After cooling the preform can be stored before being reheated for the second part of the ISBM process.

When the preform reaches the desired temperature, the optionally reheated preform is then ready for stretch blow moulding. The preform is placed within a suitably shaped mould and a gas, such as air or nitrogen, is injected into the internal volume of the preform through a nozzle as a push rod forces the polypropylene copolymer composition to expand outwardly to fill the mould. This is the stretching and blowing stage of the process. During this step the material becomes biaxially oriented which improves the physical and optical properties of the article, as well as improving the barrier properties.

The stretching temperatures used are normally between 90 °C and 160 °C, e.g. 130°C. Stretching speeds may range from 20 to 60 m/min in both TD and MD.

Control of the temperature of the polymer during the biaxial stretching step is important. If the temperature is too high the stretched polymer will include areas of melted polymer, which reduces the molecular orientation, and will show variation in sample thickness. If the temperature is too low it will not be possible to biaxially stretch the polymer without the polymer failing.

It is important that the different components be intimately mixed prior to ISBM as otherwise there is a risk of inhomogeneities. Thus, it is especially preferred to thoroughly blend the components to be moulded, for example, using a twin screw extruder, preferably a counter-rotating extruder prior to extrusion.

Viewed from another aspect the invention provides a process for the formation of an injection stretch blow moulded article comprising:
(i) extruding a polypropylene copolymer composition as hereinbefore defined and optionally at least one nucleating agent and injecting the extrudate into a mould to form a preform;
(ii) cooling the preform to a temperature of 30 °C or less in less than 10 secs;
(iii) reheating the preform to a temperature in the range 90 to 160°C; and
(iv) stretching and blowing the preform to form an article.

The present invention provides a method of making polypropylene containers, such as bottles, and other polypropylene articles by the ISBM process. Preferred articles are bottles, e.g. of 100 ml to 10 L in volume, e.g. 300 ml or 500 ml.

Articles made by an ISBM process are readily distinguishable from those made by other moulding processes such as blow or injection moulding and the skilled man will be able to determine whether an article is made by an ISBM process. For example, an ISBM article has no weld lines as are present on an extrusion blow moulded article. An ISBM article will have an inlet point at the bottom of the article. An ISBM article differs from one produced by injection moulding in the neck area where the blow pin enters the ISBM article. The skilled man is therefore able to readily distinguish ISBM articles from other moulded articles.

These ISBM articles may incorporate barrier layers. For certain applications for example, it may be necessary to incorporate a barrier layer, i.e. a layer which is impermeable to water and oxygen into the structure. This can be achieved using conventional lamination techniques. Suitable barrier layers are known and include polyamide, ethylene vinyl alcohol and metallised AI layers. The formation of multilayered articles using an ISBM process is known in the art. Preferably however, an adhesive used to bind the barrier layer to the propylene layer containing the material of the invention is added to the propylene layer. Suitable adhesives include anhydride modified polymers.

The articles prepared according to the present invention are preferably hollow containers and bottles that can be used in various food and non-food applications. The food applications comprise the storage of water, juices, oil, flavoured still and carbonated beverages, isotonic drinks, dry products and fresh milk. The non-food applications comprise the storage of cosmetic and pharmaceutical products, dishwashing or washing detergent and dry products.

The bottles and hollow containers prepared according to the present invention have excellent optical properties. This is demonstrated in figures 1 and 2 which compare the transparency of bottles made using ISBM.

The haze of the ISBM bottles of the invention may be 20 % or less.

A particular feature of the invention is that the polypropylene copolymer composition has high crystallisation temperature (Tc) across a range of cooling rates. Such rapid cooling rates lead to quick cycle times. Whilst cycle times will depend on the article in question cycle times of less than 15 secs for preform manufacture are envisaged. The term cycle time refers to the time in the first stage of the ISBM process from injection of the polypropylene copolymer composition into the mould to for the preform, cooling the preform and removing it from the mould so that the machine is ready to start the injection of composition for the next article. In particular, whilst cooling times will depend on the article in question, preform cooling times are short, such as less than 10 secs or less, e.g. 7.0 to 9 secs.

The invention will be further described with reference to the following non-limiting examples.

### EXAMPLES

### Measuring methods

### Melt Flow Rate

The melt flow rate (MFR) is determined according to ISO 1133 and is indicated in g/10min. The MFR is an indication of the flowability and hence the processability of the polymer. The higher the melt flow rate, the lower the viscosity of the polymer. The MFR₂ of polypropylene is determined at a temperature of 230 °C and under a load of 2.16 kg.

### DSC analysis

The crystallisation temperature is measured with a TA Instrument Q2000 differential scanning calorimetry device (DSC) according to ISO 11357/3 on 5 to 10 mg samples, under 50mL/min of nitrogen atmosphere. Crystallisation temperatures were obtained in a heat/cool/heat cycle with a scan rate of 10 °C/min between 30 °C and 225 °C. Crystallisation temperatures were taken as the peaks of the endotherms and exotherms in the cooling step and the second heating step respectively.

### Fast scanning calorimetry (FSC)

A power-compensation-type differential scanning calorimeter Flash DSC1 from MettlerToledo was used to analyze isothermally and non-isothermally the crystallization behavior in the range of cooling rates from 10° to 10³ K s -1 . The instrument was attached to a Huber intracooler TC45, to allow cooling down to about -100 °C. The preparation of samples includes cutting of thin sections with thickness of 10 to 15 µm from the surface of pellets. The specimens were heated to 200 °C, kept at this temperature for 0.1 s and cooled at different cooling rates to -33 °C which is below the glass transition temperature of the mobile amorphous fraction of iPP. The furnace of the instrument was purged with dry nitrogen gas at a flow rate of 30 mL /min. The sensors were subjected to the so called conditioning procedure which includes several heating and cooling runs.

Afterwards, a temperature correction of the sensor was performed. Before loading the sample a thin layer of silicon oil was spread on the heating area of the sample sensor to improve the thermal contact between the sensor and the sample. The sensors are developed by Xensor Integration (Netherlands). Each sensor is supported by a ceramic base plate for easy handling. The total area of the chip is 5.0×3.3 mm² ; it contains two separate silicon nitride/oxide membranes with an area of 1.7×1.7 mm² and a thickness of 2.1 mm each, being surrounded by a silicon frame of 300 µm thickness, serving as a heat sink. In the present work additional calibrations were not performed. Further details to the technique as such are given here:
E. lervolino, A. van Herwaarden, F. van Herwaarden, E. van de Kerkhof, P. van Grinsven, A. Leenaers, V. Mathot, P. Sarro. Temperature calibration and electrical characterization of the differential scanning calorimeter chip UFS1 for the Mettler-Toledo Flash DSC 1. Thermochim. Acta 522, 53-59 (2011). V. Mathot, M. Pyda, T. Pijpers, G. Poel, E. van de Kerkhof, S. van Herwaarden, F. van Herwaarden, A. Leenaers. The Flash DSC 1, a power compensation twin-type, chip-based fast scanning calorimeter (FSC): First findings of polymers. Thermochim. Acta 552, 36-45 (2011).
M. van Drongelen, T. Meijer-Vissers, D. Cavallo, G. Portale, G. Vanden Poel, R. Androsch R. Microfocus wide-angle X-ray scattering of polymers crystallized in a fast scanning chip calorimeter. Thermochim Acta 563, 33-37 (2013).

### Haze

Haze is determined according to ASTM D1003 on the ISBM bottles produced in the examples below. The plaques for determining haze have been cut out from the middle of the cylindrical part of the ISBM-bottles. The dimension of the plaques were 60x60x0.7 mm

### Comonomer content

### Poly(propylene-co-ethylene) - ethylene content by IR spectroscopy

Quantitative infrared (IR) spectroscopy was used to quantify the ethylene content of the poly(ethylene-co-propene) copolymers through calibration to a primary method.

Calibration was facilitated through the use of a set of in-house non-commercial calibration standards of known ethylene contents determined by quantitative ¹³C solution-state nuclear magnetic resonance (NMR) spectroscopy. The calibration procedure was undertaken in the conventional manner well documented in the literature. The calibration set consisted of 38 calibration standards with ethylene contents ranging 0.2-75.0 wt% produced at either pilot or full scale under a variety of conditions. The calibration set was selected to reflect the typical variety of copolymers encountered by the final quantitative IR spectroscopy method.

Quantitative IR spectra were recorded in the solid-state using a Bruker Vertex 70 FTIR spectrometer. Spectra were recorded on 25x25 mm square films of 300 um thickness prepared by compression moulding at 180 - 210°C and 4 - 6 mPa. For samples with very high ethylene contents (>50 mol%) 100 um thick films were used. Standard transmission FTIR spectroscopy was employed using a spectral range of 5000-500 cm⁻¹, an aperture of 6 mm, a spectral resolution of 2 cm⁻¹, 16 background scans, 16 spectrum scans, an interferogram zero filling factor of 64 and Blackmann-Harris 3-term apodisation. Quantitative analysis was undertaken using the total area of the CH₂ rocking deformations at 730 and 720 cm⁻¹ (A_{Q}) corresponding to (CH₂)_{>2} structural units (integration method G, limits 762 and 694 cm⁻¹). The quantitative band was normalised to the area of the CH band at 4323 cm⁻¹ (A_{R}) corresponding to CH structural units (integration method G, limits 4650, 4007 cm⁻¹). The ethylene content in units of weight percent was then predicted from the normalised absorption (A*_{Q}* / A*_{R}*) using a quadratic calibration curve. The calibration curve having previously been constructed by ordinary least squares (OLS) regression of the normalised absorptions and primary comonomer contents measured on the calibration set.

### Poly(propylene-co-ethylene) - ethylene content for calibration using ¹³C NMR spectroscopy

Quantitative ¹³C{¹H} NMR spectra were recorded in the solution-state using a Bruker Avance III 400 NMR spectrometer operating at 400.15 and 100.62 MHz for ¹H and ¹³C respectively. All spectra were recorded using a ¹³C optimised 10 mm extended temperature probehead at 125°C using nitrogen gas for all pneumatics. Approximately 200 mg of material was dissolved in 3 ml of *1,2*-tetrachloroethane-d₂ (TCE-*d*₂) along with chromium (III) acetylacetonate (Cr(acac)₃) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225, Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative ¹³C{¹H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950) and the comonomer fraction calculated as the fraction of ethylene in the polymer with respect to all monomer in the polymer: fE = ( E / ( P + E ) The comonomer fraction was quantified using the method of Wang et. al. (Wang, W-J., Zhu, S., Macromolecules 33 (2000), 1157) through integration of multiple signals across the whole spectral region in the ¹³C{¹H} spectra. This method was chosen for its robust nature and ability to account for the presence of regio-defects when needed. Integral regions were slightly adjusted to increase applicability across the whole range of encountered comonomer contents. The mole percent comonomer incorporation was calculated from the mole fraction: E [mol%] = 100 * fE. The weight percent comonomer incorporation was calculated from the mole fraction: E [wt%] = 100 * (fE * 28.06 ) / ( (fE * 28.06) + ((1-fE) * 42.08) )

### Inventive example

### Catalyst preparation

For the preparation of the catalyst 3.4 litre of 2-ethylhexanol and 810 ml of propylene glycol butyl monoether (in a molar ratio 4/1) were added to a 20.0 I reactor. Then 7.8 litre of a 20.0 % solution in toluene of BEM (butyl ethyl magnesium) provided by Crompton GmbH, were slowly added to the well stirred alcohol mixture. During the addition, the temperature was kept at 10.0 °C. After addition, the temperature of the reaction mixture was raised to 60.0 °C and mixing was continued at this temperature for 30 minutes. Finally after cooling to room temperature the obtained Mg-alkoxide was transferred to a storage vessel.

21.2 g of Mg alkoxide prepared above was mixed with 4.0 ml bis(2-ethylhexyl) citraconate for 5 min. After mixing the obtained Mg complex was used immediately in the preparation of the catalyst component.

19.5 ml of titanium tetrachloride was placed in a 300 ml reactor equipped with a mechanical stirrer at 25.0 °C. Mixing speed was adjusted to 170 rpm. 26.0 g of Mg-complex prepared above was added within 30 minutes keeping the temperature at 25.0 °C. 3.0 ml of Viscoplex^{®} 1-254 and 1.0 ml of a toluene solution with 2 mg Necadd 447^{™} was added. Then 24.0 ml of heptane was added to form an emulsion. Mixing was continued for 30 minutes at 25.0 °C, after which the reactor temperature was raised to 90.0 °C within 30 minutes. The reaction mixture was stirred for a further 30 minutes at 90.0 °C. Afterwards stirring was stopped and the reaction mixture was allowed to settle for 15 minutes at 90.0 °C. The solid material was washed 5 times: washings were made at 80.0 °C under stirring for 30 min with 170 rpm. After stirring was stopped the reaction mixture was allowed to settle for 20-30 minutes and followed by siphoning.
Wash 1: washing was made with a mixture of 100 ml of toluene and 1 ml donor
Wash 2: washing was made with a mixture of 30 ml of TiCl4 and 1 ml of donor.
Wash 3: washing was made with 100 ml of toluene.
Wash 4: washing was made with 60 ml of heptane.
Wash 5: washing was made with 60 ml of heptane under 10 minutes stirring.

Afterwards stirring was stopped and the reaction mixture was allowed to settle for 10 minutes while decreasing the temperature to 70 °C with subsequent siphoning, followed by N₂ sparging for 20 minutes to yield an air sensitive powder.

Inventive example (IE) was produced in a pilot plant with a prepolymerization reactor, one slurry loop reactor and two gas phase reactors. The solid catalyst component described above along with triethyl-aluminium (TEAL) as co-catalyst and dicyclopentyl dimethoxy silane (D-donor) as external donor, were used in the process.

The polymerization process conditions and properties of the propylene polymer fractions are described in Table 1.

The polypropylene copolymer composition is then extruded with a nucleating agent in a co-rotating twin screw extruder type Coperion ZSK 40 (screw diameter 40 mm, L/D ratio 38). The temperatures in the extruder were in the range of 190-230 °C. In the inventive example, 0.05 wt% of Irganox 1010 (Pentaerythrityl-tetrakis(3-(3',5'-di-tert. butyl-4-hydroxyphenyl)-propionate, CAS No. 6683-19-8, commercially available from BASF AG, Germany), 0.05 wt% of Irgafos 168 (Tris (2,4-di-t-butylphenyl) phosphite, CAS No. 31570-04-4, commercially available from BASF AG, Germany), 0.10 wt% of Calcium stearate (CAS. No. 1592-23-0, commercially available under the trade name Ceasit FI from Baerlocher GmbH, Germany) and 0.06 wt% of Glycerol monostearate (CAS No. 97593-29-8, commercially available with 90% purity under the trade name Grindsted PS 426 from Danisco A/S, Denmark), 0.17 wt% Millad 3988 (CAS No. 135861-56-2, Milliken) were added to the extruder as additives. 0.3 ppm of Poly Vinyl Cyclo Hexane (PVCH) was added via a nucleating masterbatch

Said nucleating masterbatch is a PP-homopolymer, MFR 20, and comprises ca 15 ppm of PVCH as polymeric nucleating agent.

Following the extrusion step and after solidification of the strands in a water bath, the resulting polypropylene copolymer composition was pelletized in a strand pelletizer.

**Table 1. Polymerization process conditions and properties of the propylene polymer fractions**

| | | **IE1** |
|---|---|---|
| **Pre-polymerization reactor** | | |
| Temperature | [°C] | 30 |
| Catalyst feed | [g/h] | 4.4 |
| TEAL/propylene | [g/t propylene] | 170 |
| Residence Time | [min] | 20 |

| **Loop reactor (first propylene polymer fraction)** | | |
|---|---|---|
| Temperature | [°C] | 70 |
| Pressure | [kPa] | 5400 |
| Split | [%] | 53 |
| H₂/C₃ ratio | [mol/kmol] | 6.7 |
| C₂/C₃ ratio | [mol/kmol] | 4.1 |
| MFR₂ | [g/10min] | 22 |
| C₂ content after loop reactor | [wt%] | 0.8 |

| **First gas-phase reactor** | | |
|---|---|---|
| Temperature | [°C] | 80 |
| Pressure | [kPa] | 1820 |
| Split | [%] | 47 |
| H₂/C₃ ratio | [mol/kmol] | 65 |
| C₂/C₃ ratio | [mol/kmol] | 40 |
| MFR₂ | [g/10min] | 20 |
| C₂ content after 1^{st} gas phase reactor | [wt%] | 3.8 |

| | | |
|---|---|---|
| *Split relates to the amount of propylene polymer produced in each specific reactor. | | |

**Table 2 Crystallisation temperatures at fast cooling rates**

| | CE2 | IE |
|---|---|---|
| Cooling rate [K/sec] | | |
| K/s | Tc. | Tc. |
| | | |
| 0,05 | 124 | |
| 0,16 | 120 | 127 |
| 0,5 | 116 | |
| 1 | 102 | 116 |
| 2 | 97 | 113 |
| 3 | 94 | 112 |
| 4 | 91 | 110 |
| 5 | 90 | 108 |
| 6 | 89 | 108 |
| 7 | 88 | 106 |
| 8 | 86 | 106 |
| 9 | 85 | 105 |
| 10 | 84 | 104 |
| 20 | 81 | 99 |
| 30 | 75 | 96 |
| 40 | 72 | 93 |
| 50 | 70 | 91 |
| 60 | 65 | 89 |
| 70 | 59 | 87 |
| 80 | 58 | 85 |
| 90 | 55 | 84 |
| 100 | 54 | 83 |
| 200 | 52 | 72 |
| 300 | | 63 |
| 400 | | 58 |
| 500 | | 57 |
| 600 | | 53 |

Its properties are compared to CE1, a propylene-random copolymer having with an MFR₂ of ca 22 g/10 min. It contains ca 3 wt.-% of ethylene and 3000 ppm 1,2,3-trideoxy-4,6:5,7-bis-O-((4-propylphenyl) methylene) nonitol; and

CE2 is a propylene-random copolymer, with an MFR₂ of ca 13 g/10 min. It contains ca 3.5 wt.-% of ethylene and 1700 ppm 1,3:2,4-bis(3,4-dimethylbenzylidene)sorbitol as nucleating agent.

The 4 mm preforms were injection moulded in Battenfeld smart power 90, the optimized process parameters are shown in Table 3. The preform has a diameter of 38.5mm, length of 144,9 mm, and wall thickness of 3.2 mm. The quality of the preform is judged by eye and is free of surface defects, deformation or warpage.

**Table 3. Preform Manufacture (injection).**

| | | CE1 | CE2 | IE1 |
|---|---|---|---|---|
| Nozzle temperature | °C | 240 | 240 | 240 |
| Zone 1 | °C | 240 | 240 | 240 |
| Zone 2 | °C | 230 | 230 | 230 |
| Zone 3 | °C | 220 | 220 | 220 |
| Mould temperature | °C | 30 | 30 | 30 |
| Melt temperature | °C | 230 | 230 | 230 |
| Dynamic pressure | bar | 60 | 60 | 60 |
| Holding pressure | bar | 700 | 700 | 700 |
| Holding time | s | 25 | 25 | 25 |
| **Cooling Time** | **s** | **10** | **10** | **8** |
| Clamping force | kN | 900 | 900 | 900 |

As can be seen, IE1 has the shortest preform cooling time. The cooling time of IE1 is 20% less than CE1 or CE2. Both CEs have the same cooling time. The quality of the preform is the same for all examples.

The preform was stored at room temperature for several days and then the ISBM bottles were made. The bottles were prepared using a stretch blow moulding machine manufactured by PET technologies applying identical processing parameters for all the samples..

The final bottle has a diameter of 90 mm, length of 228 mm and a wall thickness of 0.7 mm. Table 4 lists the key parameters for the ISBM process. Table 5 gives the properties of the bottle.

**Table 4. (stretch blow moulding)**

| | | |
|---|---|---|
| Tool temperature | °C | 145 |
| Cycle frequency | Hz | 40 |
| Cycle time | s | 600 |
| Blow up pressure | bar | 36 |
| Blowing time | s | 6,98 |
| Depressurising time | s | 0,4 |
| Stretching time/delay | s | 0 |

**Table 5**

| | | CE1 | CE2 | IE1 |
|---|---|---|---|---|
| Wall thickness | mm | 0,7 | 0,7 | 0,7 |
| Haze | % | 10,3 | 16,1 | 8,7 |

All of the preforms shows good process behaviour. Moreover, IE1 has better optics (lower haze) than CE1 and CE2. The inventive material shows advantages in the production of the preform as it has shorter cycle times.

When these preforms are converted into ISBM-bottles, the bottles produced have better haze without the need of adjusting the ISBM-parameters. This allows convenient replacement and use of the new material.

## Claims

1. An injection stretch blow moulded article (ISBM) comprising:
(I) a polypropylene copolymer composition having an ethylene content of 2.0 to 5.0 wt%; and
a crystallisation temperature (Tc) of at least 90°C when subjected to a cooling rate of 10 K/s;
a crystallisation temperature (Tc) of at least 55°C when subjected to a cooling rate of 100 K/s; and
a crystallisation temperature (Tc) of at least 40°C when subjected to a cooling rate of 300 K/s; and
(II) optionally at least one nucleating agent;
wherein the polypropylene copolymer composition comprises:
40 to 59 wt% of a first homopolymer fraction or first propylene copolymer fraction of propylene and one or more comonomers selected from ethylene and C4-C10 alpha-olefins said first fraction having a comonomer content of 0.0 to 1.8 wt%, and
60 to 41 wt% of a second propylene copolymer fraction.

2. The ISBM article as claimed in claim 1 wherein the polypropylene copolymer composition has a MFR2 in the range of from 12.0 to 60.0 g/10 min, as measured according to ISO 1133 at 230°C under a load of 2.16 kg.

3. The ISBM article as claimed in claim 2 wherein the ratio of the comonomer content of the first homo or copolymer fraction to the comonomer content of the polypropylene copolymer composition is 0.35 or less.

4. The ISBM article as claimed in any preceding claim wherein the polypropylene copolymer composition comprises a first homo or copolymer fraction, a second propylene copolymer fraction and a third propylene copolymer fraction.

5. The ISBM article as claimed in any preceding claim wherein the polypropylene copolymer composition has an ethylene content in the range of 2.0 to 3.4 wt% or 2.0 to 3.0 wt% relative to the total amount of monomers present in the polypropylene copolymer composition.

6. The ISBM article as claimed in any preceding claim wherein the polypropylene copolymer composition comprises a MFR2 in the range of from 12 to 35 g/10min.

7. The ISBM article as claimed in any preceding claim wherein the polypropylene copolymer composition comprises 2.0 to 3.4 wt% ethylene and an MFR2 of 12 to 20 g/10min.

8. The ISBM article as claimed in any preceding claim comprising a nucleating agent,

9. The ISBM article as claimed in any preceding claim comprising a polyvinyl cyclohexane based nucleating agent.

10. A process for the formation of an injection stretch blow moulded article as claimed in claims 1 to 7 comprising
(i) extruding a polypropylene copolymer composition as defined in claims 1 to 7 and optionally at least one nucleating agent, e.g. as defined in claim 9, and injecting the extrudate into a mould to form a preform;
(ii) allowing the preform to cool;
(iii) reheating the preform to a temperature in the range 90 to 160°C; and
(iv) stretching and blowing the preform to form an article.

11. A process for the formation of an injection stretch blow moulded article as claimed in claims 1 to 7 comprising
(i) extruding a polypropylene copolymer composition as defined in claim 1 to 7 and optionally at least one nucleating agent, e.g. as defined in claim 9, and injecting the extrudate into a mould to form a preform; and
(ii) stretching and blowing the preform to form an article without allowing the preform to cool.

12. The process as claimed in claim 10 or 11 wherein the polypropylene copolymer composition is prepared by sequential polymerization comprising the steps:
A) polymerizing in a first reactor in the presence of a Ziegler-Natta catalyst, monomers comprising propylene and optionally one or more comonomers selected from ethylene and C4-C10 alpha-olefins, to obtain a first propylene polymer fraction having a comonomer content in the range of 0.0 to 1.8 wt%, and a MFR2 in the range of from 12.0 to 40.0 g/10 min, as measured according to ISO 1133 at 230 °C under a load of 2.16 kg;
B) polymerizing in a second reactor monomers comprising propylene, ethylene and optionally one or more comonomers selected from C4-C10 alpha-olefins, in the presence of the first propylene polymer fraction, to obtain a second propylene polymer fraction,
wherein the polypropylene copolymer composition comprises 40 to 59 wt% of said first propylene polymer fraction and 41 to 60 wt% of said second propylene polymer fraction and has an MFR2 in the range of from 12.0 to 60.0 g/10 min, as measured according to ISO 1133 at 230°C under a load of 2.16 kg, has an ethylene content in the range of from 2.0 to 5.0 wt%; and
a crystallisation temperature (Tc) of at least 90°C when subjected to a cooling rate of 10 K/s.;
a crystallisation temperature (Tc) of at least 55°C when subjected to a cooling rate of 100 K/s.; and
a crystallisation temperature (Tc) of at least 40°C when subjected to a cooling rate of 300 K/s.

13. The process as claimed in claim 10 to 11 wherein the polypropylene copolymer composition is prepared by sequential polymerization comprising the steps:
A) polymerizing in a first reactor, in the presence of a Ziegler-Natta catalyst, monomers comprising propylene and optionally one or more comonomers selected from ethylene and C4-C10 alpha olefins, to obtain a first propylene polymer fraction having a comonomer content in the range of 0.0 to 1.8 wt% and a MFR2 in the range of from 12.0 to 40.0 g/10 min, as measured according to ISO 1133 at 230 °C under a load of 2.16 kg;
(B) polymerizing in a second reactor, monomers comprising propylene and ethylene and optionally C4-C10 alpha olefins, in the presence of the first propylene polymer fraction, to obtain a second propylene polymer fraction,
(C) polymerizing in a third reactor, preferably a second gas-phase reactor, monomers comprising propylene and ethylene and optionally C4-C10 alpha olefins, in the presence of the second propylene polymer fraction to obtain a third propylene polymer fraction;
wherein the polypropylene copolymer composition comprising said first, second and third propylene polymer fractions has an MFR2 in the range of from 12.0 to 60.0 g/10min, as measured according to ISO 1133 at 230 °C under a load of 2.16 kg, has an ethylene content in the range of from 2.0 to 5.0 wt; and
a crystallisation temperature (Tc) of at least 90°C when subjected to a cooling rate of 10 K/s.;
a crystallisation temperature (Tc) of at least 55°C when subjected to a cooling rate of 100 K/s.; and
a crystallisation temperature (Tc) of at least 40°C when subjected to a cooling rate of 300 K/s.

14. A process as claimed in claim 10, 12 or 13 in which the preform is cooled in step (ii) to less than 30°C in less than 10 secs.

15. Use of a polypropylene copolymer composition as defined in claim 1 to 7, optionally together with a nucleating agent, to improve the optics of an ISBM article made therewith to reduce the cooling time of a preform made in an ISBM process.

## Patentansprüche

1. Spritzstreckblasgeformter (ISBM) Artikel, umfassend:
(I) eine Polypropylencopolymerzusammensetzung, die einen Ethylengehalt von 2,0 bis 5,0 Gew.-% aufweist; und
eine Kristallisationstemperatur (Tc) von mindestens 90 °C bei einer Abkühlrate von 10 K/s;
eine Kristallisationstemperatur (Tc) von mindestens 55 °C bei einer Abkühlrate von 100 K/s; und
eine Kristallisationstemperatur (Tc) von mindestens 40 °C bei einer Abkühlrate von 300 K/s; und
(II) optional mindestens einen Keimbildner; wobei die Polypropylencopolymerzusammensetzung Folgendes umfasst:
40 bis 59 Gew.-% einer ersten Homopolymerfraktion oder ersten Propylencopolymerfraktion aus Propylen und einem oder mehreren Comonomeren, ausgewählt aus Ethylen und C4-C10-Alpha-Olefinen, wobei die erste Fraktion einen Comonomergehalt von 0,0 bis 1,8 Gew.-% aufweist, und
60 bis 41 Gew.-% einer zweiten Propylencopolymerfraktion.

2. ISBM-Artikel nach Anspruch 1, wobei die Polypropylencopolymerzusammensetzung eine MFR2 im Bereich von 12,0 bis 60,0 g/10 min aufweist, wie nach ISO 1133 bei 230 °C unter einer Last von 2,16 kg gemessen.

3. ISBM-Artikel nach Anspruch 2, wobei das Verhältnis des Comonomergehalts der ersten Homo- oder Copolymerfraktion zum Comonomergehalt der Polypropylencopolymerzusammensetzung 0,35 oder weniger beträgt.

4. ISBM-Artikel nach einem vorstehenden Anspruch, wobei die Polypropylencopolymerzusammensetzung eine erste Homo- oder Copolymerfraktion, eine zweite Propylencopolymerfraktion und eine dritte Propylencopolymerfraktion umfasst.

5. ISBM-Artikel nach einem vorstehenden Anspruch wobei die Polypropylencopolymerzusammensetzung einen Ethylengehalt im Bereich von 2,0 bis 3,4 Gew.-% oder 2,0 bis 3,0 Gew.-% in Bezug auf die Gesamtmenge der in der Polypropylencopolymerzusammensetzung vorhandenen Monomere aufweist.

6. ISBM-Artikel nach einem vorstehenden Anspruch, wobei die Polypropylencopolymerzusammensetzung eine MFR2 im Bereich von 12 bis 35 g/10 min aufweist.

7. ISBM-Artikel nach einem vorstehenden Anspruch, wobei die Polypropylencopolymerzusammensetzung 2,0 bis 3,4 Gew.-% Ethylen und eine MFR2 von 12 bis 20 g/10 min umfasst.

8. ISBM-Artikel nach einem vorstehenden Anspruch, der einen Keimbildner umfasst,

9. ISBM-Artikel nach einem vorstehenden Anspruch, der einen Keimbildner auf der Basis von Polyvinylcyclohexan umfasst.

10. Prozess zur Herstellung eines durch spritzstreckblasgeformten Artikels nach Ansprüchen 1 bis 7, umfassend:
(i) Extrudieren einer Polypropylencopolymerzusammensetzung wie in Ansprüchen 1 bis 7 definiert und optional mindestens eines Keimbildners, z. B. wie in Anspruch 9 definiert, und Einspritzen des Extrudats in eine Form, um einen Vorformling zu bilden;
(ii) Abkühlenlassen des Vorformlings;
(iii) Wiedererhitzen des Vorformlings auf eine Temperatur im Bereich von 90 bis 160 °C; und
(iv) Strecken und Blasen des Vorformlings, um einen Artikel zu bilden.

11. Prozess zur Herstellung eines durch spritzstreckblasgeformten Artikels nach Ansprüchen 1 bis 7, umfassend:
(i) Extrudieren einer Polypropylencopolymerzusammensetzung wie in Anspruch 1 bis 7 definiert und optional mindestens eines Keimbildners, z. B. wie in Anspruch 9 definiert, und Einspritzen des Extrudats in eine Form, um einen Vorformling zu bilden; und
(ii) Strecken und Blasen des Vorformlings, um einen Artikel zu bilden, ohne den Vorformling abkühlen zu lassen.

12. Prozess nach Anspruch 10 oder 11, wobei die Polypropylencopolymerzusammensetzung durch sequentielle Polymerisation hergestellt wird, die die folgenden Schritte umfasst:
a) Polymerisieren, in einem ersten Reaktor in der Gegenwart eines Ziegler-Natta-Katalysators, von Monomeren, umfassend Propylen und optional ein oder mehrere Comonomere, ausgewählt aus Ethylen und C4-C10-alpha-Olefinen, um eine erste Propylenpolymerfraktion zu erhalten, die einen Comonomergehalt im Bereich von 0,0 bis 1,8 Gew.-% und eine MFR2 im Bereich von 12,0 bis 40,0 g/10 min, gemessen gemäß ISO 1133 bei 230 °C unter einer Last von 2,16 kg, aufweist.
b) Polymerisieren, in einem zweiten Reaktor, von Monomeren, umfassend Propylen, Ethylen und optional ein oder mehrere Comonomere, ausgewählt aus Ethylen und C4-C10-alpha-Olefinen, in der Gegenwart der ersten Propylenpolymerfraktion, um eine zweite Propylenpolymerfraktion zu erhalten,
wobei die Polypropylencopolymerzusammensetzung 40 bis 59 Gew.-% der ersten Propylenpolymerfraktion und 41 bis 60 Gew.-% der zweiten Propylenpolymerfraktion umfasst und eine MFR2 im Bereich von 12,0 bis 60,0 g/10 min, gemessen nach ISO 1133 bei 230 °C unter einer Last von 2,16 kg, aufweist, einen Ethylengehalt im Bereich von 2,0 bis 5,0 Gew.-% aufweist; und
eine Kristallisationstemperatur (Tc) von mindestens 90 °C bei einer Abkühlrate von 10 K/s.;
eine Kristallisationstemperatur (Tc) von mindestens 55 °C bei einer Abkühlrate von 100 K/s.; und
eine Kristallisationstemperatur (Tc) von mindestens 40 °C bei einer Abkühlrate von 300 K/s.

13. Prozess nach Anspruch 10 bis 11, wobei die Polypropylencopolymerzusammensetzung durch sequentielle Polymerisation hergestellt wird, die die folgenden Schritte umfasst:
(A) Polymerisieren, in einem ersten Reaktor in der Gegenwart eines Ziegler-Natta-Katalysators, von Monomeren, umfassend Propylen und optional ein oder mehrere Comonomere, ausgewählt aus Ethylen und C4-C10-alpha-Olefinen, um eine erste Propylenpolymerfraktion zu erhalten, die einen Comonomergehalt im Bereich von 0,0 bis 1,8 Gew.-% und eine MFR2 im Bereich von 12,0 bis 40,0 g/10 min, gemessen gemäß ISO 1133 bei 230°C unter einer Last von 2,16 kg, aufweist;
(B) Polymerisieren, in einem zweiten Reaktor, von Monomeren, umfassend Propylen und Ethylen und optional C4-C10-alpha-Olefine, in der Gegenwart der ersten Propylenpolymerfraktion, um eine zweite Propylenpolymerfraktion zu erhalten,
(C) Polymerisieren, in einem dritten Reaktor, bevorzugt einem zweiten Gasphasenreaktor, von Monomeren, umfassend Propylen und Ethylen und optional C4-C10-alpha-Olefine, in der Gegenwart der zweiten Propylenpolymerfraktion, um eine dritte Propylenpolymerfraktion zu erhalten;
wobei die Polypropylencopolymerzusammensetzung, die die erste, zweite und dritte Propylenpolymerfraktion umfasst, eine MFR2 im Bereich von 12,0 bis 60,0g/10 min, gemessen nach ISO 1133 bei 230 °C unter einer Last von 2,16 kg, aufweist, einen Ethylengehalt im Bereich von 2,0 bis 5,0 Gew.-% aufweist; und
eine Kristallisationstemperatur (Tc) von mindestens 90 °C bei einer Abkühlrate von 10 K/s.;
eine Kristallisationstemperatur (Tc) von mindestens 55 °C bei einer Abkühlrate von 100 K/s.; und
eine Kristallisationstemperatur (Tc) von mindestens 40 °C bei einer Abkühlrate von 300 K/s.

14. Prozess nach Anspruch 10, 12 oder 13, bei dem der Vorformling in Schritt (ii) in weniger als 10 Sekunden auf weniger als 30 °C abgekühlt wird.

15. Verwendung einer Polypropylencopolymerzusammensetzung, wie in Anspruch 1 bis 7 definiert, optional zusammen mit einem Keimbildner, um die Optik eines damit hergestellten ISBM-Artikels zu verbessern, um die Abkühlzeit eines in einem ISBM-Prozess hergestellten Vorformlings zu verkürzen.

## Revendications

1. Article moulé par injection-soufflage avec bi-étirage (ISBM) comprenant :
(I) une composition de copolymère de polypropylène présentant une teneur en éthylène de 2,0 à 5,0 % en poids ; et
une température de cristallisation (Tc) d'au moins 90 °C lorsqu'elle est soumise à une vitesse de refroidissement de 10 K/s ;
une température de cristallisation (Tc) d'au moins 55 °C lorsqu'elle est soumise à une vitesse de refroidissement de 100 K/s ; et
une température de cristallisation (Tc) d'au moins 40 °C lorsqu'elle est soumise à une vitesse de refroidissement de 300 K/s ; et
(II) facultativement au moins un agent de nucléation ; dans lequel la composition de copolymère de polypropylène comprend :
40 à 59 % en poids d'une première fraction d'homopolymère ou d'une première fraction de copolymère de propylène de propylène et d'un ou plusieurs comonomères choisis parmi l'éthylène et les alpha-oléfines en C4-C10, ladite première fraction présentant une teneur en comonomère de 0,0 à 1,8 % en poids, et
60 à 41 % en poids d'une deuxième fraction de copolymère de propylène.

2. Article ISBM selon la revendication 1, dans lequel la composition de copolymère de polypropylène présente un MFR2 dans la plage de 12,0 à 60,0 g/10 min, tel que mesuré conformément à la norme ISO 1133 à 230 °C sous une charge de 2,16 kg.

3. Article ISBM selon la revendication 2, dans lequel le rapport entre la teneur en comonomère de la première fraction d'homopolymère ou de copolymère et la teneur en comonomère de la composition de copolymère de polypropylène est inférieur ou égal à 0,35.

4. Article ISBM selon une quelconque revendication précédente, dans lequel la composition de copolymère de polypropylène comprend une première fraction d'homopolymère ou de copolymère, une deuxième fraction de copolymère de propylène et une troisième fraction de copolymère de propylène.

5. Article ISBM selon une quelconque revendication précédente, dans lequel la composition de copolymère de polypropylène présente une teneur en éthylène dans la plage de 2,0 à 3,4 % en poids ou de 2,0 à 3,0 % en poids par rapport à la quantité totale de monomères présents dans la composition de copolymère de polypropylène.

6. Article ISBM selon une quelconque revendication précédente, dans lequel la composition de copolymère de polypropylène comprend un MFR2 dans la plage de 12 à 35 g/10 min.

7. Article ISBM selon une quelconque revendication précédente, dans lequel la composition de copolymère de polypropylène comprend 2,0 à 3,4 % en poids d'éthylène et un MFR2 de 12 à 20 g/10 min.

8. Article ISBM selon une quelconque revendication précédente comprenant un agent de nucléation.

9. Article ISBM selon une quelconque revendication précédente comprenant un agent de nucléation à base de polyvinylcyclohexane.

10. Processus de formation d'un article moulé par injection-soufflage avec bi-étirage selon les revendications 1 à 7, comprenant :
(i) l'extrusion d'une composition de copolymère de polypropylène telle que définie dans les revendications 1 à 7 et facultativement d'au moins un agent de nucléation, tel que défini dans la revendication 9, et l'injection de l'extrudat dans un moule pour former une préforme ;
(ii) le fait de laisser refroidir la préforme ;
(iii) le réchauffement de la préforme à une température dans la plage de 90 à 160 °C ; et
(iv) l'étirage et le soufflage de la préforme pour former un article.

11. Processus de formation d'un article moulé par injection-soufflage avec bi-étirage selon les revendications 1 à 7, comprenant :
(i) l'extrusion d'une composition de copolymère de polypropylène telle que définie dans les revendications 1 à 7 et facultativement d'au moins un agent de nucléation, par exemple tel que défini dans la revendication 9, et l'injection de l'extrudat dans un moule pour former une préforme ; et
(ii) l'étirage et le soufflage de la préforme pour former un article sans laisser refroidir la préforme.

12. Processus selon la revendication 10 ou 11, dans lequel la composition de copolymère de polypropylène est préparée par polymérisation séquentielle comprenant les étapes suivantes :
A) la polymérisation, dans un premier réacteur en présence d'un catalyseur Ziegler-Natta, de monomères comprenant du propylène et facultativement un ou plusieurs comonomères sélectionnés parmi l'éthylène et les alpha-oléfines en C4-C10, pour obtenir une première fraction de polymère de propylène présentant une teneur en comonomère dans la plage de 0,0 à 1,8 % en poids, et un MFR2 dans la plage de 12,0 à 40,0 g/10 min, tel que mesuré conformément à la norme ISO 1133 à 230 °C sous une charge de 2,16 kg ;
B) la polymérisation, dans un deuxième réacteur, de monomères comprenant du propylène, de l'éthylène et facultativement un ou plusieurs comonomères sélectionnés parmi les alpha-oléfines en C4-C10, en présence de la première fraction de polymère de propylène, pour obtenir une deuxième fraction de polymère de propylène,
dans lequel la composition de copolymère de polypropylène comprend 40 à 59 % en poids de ladite première fraction de polymère de propylène et 41 à 60 % en poids de ladite seconde fraction de polymère de propylène et présente un MFR2 dans la plage de 12,0 à 60,0 g/10 min, tel que mesuré selon la norme ISO 1133 à 230 °C sous une charge de 2,16 kg, présente une teneur en éthylène dans la plage de 2,0 à 5,0 % en poids ; et
une température de cristallisation (Tc) d'au moins 90 °C lorsqu'elle est soumise à une vitesse de refroidissement de 10 K/s ;
une température de cristallisation (Tc) d'au moins 55 °C lorsqu'elle est soumise à une vitesse de refroidissement de 100 K/s ; et
une température de cristallisation (Tc) d'au moins 40 °C lorsqu'elle est soumise à une vitesse de refroidissement de 300 K/s.

13. Processus selon les revendications 10 à 11, dans lequel la composition de copolymère de polypropylène est préparée par polymérisation séquentielle comprenant les étapes suivantes :
A) la polymérisation, dans un premier réacteur en présence d'un catalyseur Ziegler-Natta, de monomères comprenant du propylène et facultativement un ou plusieurs comonomères sélectionnés parmi l'éthylène et les alpha-oléfines en C4-C10, pour obtenir une première fraction de polymère de propylène présentant une teneur en comonomère dans la plage de 0,0 à 1,8 % en poids, et un MFR2 dans la plage de 12,0 à 40,0 g/10 min, tel que mesuré conformément à la norme ISO 1133 à 230 °C sous une charge de 2,16 kg,
(B) la polymérisation, dans un deuxième réacteur, de monomères comprenant du propylène et de l'éthylène et facultativement des alpha-oléfines en C4-C10, en présence de la première fraction de polymère de propylène, pour obtenir une deuxième fraction de polymère de propylène,
(C) la polymérisation, dans un troisième réacteur, de préférence un second réacteur à phase gazeuse, de monomères comprenant du propylène et de l'éthylène et facultativement des alpha-oléfines en C4-C10, en présence de la deuxième fraction de polymère de propylène pour obtenir une troisième fraction de polymère de propylène ;
dans lequel la composition de copolymère de polypropylène comprenant lesdites première, deuxième et troisième fractions de polymère de propylène présente un MFR2 dans la plage de 12,0 à 60,0 g/10 min, tel que mesuré selon la norme ISO 1133 à 230 °C sous une charge de 2,16 kg, présente une teneur en éthylène dans la plage de 2,0 à 5,0 % en poids ; et
une température de cristallisation (Tc) d'au moins 90 °C lorsqu'elle est soumise à une vitesse de refroidissement de 10 K/s ;
une température de cristallisation (Tc) d'au moins 55 °C lorsqu'elle est soumise à une vitesse de refroidissement de 100 K/s ; et
une température de cristallisation (Tc) d'au moins 40 °C lorsqu'elle est soumise à une vitesse de refroidissement de 300 K/s.

14. Processus selon la revendication 10, 12 ou 13, dans lequel la préforme est refroidie à l'étape (ii) à moins de 30 °C en moins de 10 secondes.

15. Utilisation d'une composition de copolymère de polypropylène telle que définie dans les revendications 1 à 7, facultativement avec un agent de nucléation, pour améliorer l'optique d'un article ISBM fabriqué avec celle-ci afin de réduire le temps de refroidissement d'une préforme fabriquée dans un processus ISBM.
